(19) **Europäisches Patentamt / European Patent Office / Office européen des brevets**

(11) **EP 2 507 074 B1**

(12) **FASCICULE DE BREVET EUROPEEN**

(45) Date de publication et mention
de la délivrance du brevet:
**25.06.2014 Bulletin 2014/26**

(21) Numéro de dépôt: **10793197.4**

(22) Date de dépôt: **06.12.2010**

(51) Int Cl.:
**B60C 11/12** [(2006.01)]

(86) Numéro de dépôt international:
**PCT/EP2010/068983**

(87) Numéro de publication internationale:
**WO 2011/067412 (09.06.2011 Gazette 2011/23)**

(54) **BANDE DE ROULEMENT POUR PNEUMATIQUE COMPORTANT DES CAVITES PARTICULIERES**

REIFENPROFIL MIT SPEZIELLEN VERTIEFUNGEN

TYRE TREAD COMPRISING SPECIFIC CAVITIES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.12.2009 FR 0958662**

(43) Date de publication de la demande:
**10.10.2012 Bulletin 2012/41**

(73) Titulaires:
- **Compagnie Générale des Etablissements Michelin**
  **63000 Clermont-Ferrand (FR)**
- **MICHELIN Recherche et Technique S.A.**
  **1763 Granges-Paccot (CH)**

(72) Inventeur: **FRAENKEL, Bertrand**
**F-63210 Saint-Pierre-Roche (FR)**

(74) Mandataire: **Lasson, Cédric Y. M.**
**Manufacture Française**
**des Pneumatiques Michelin**
**SGD/LG/PI-F35-Ladoux**
**63040 Clermont-Ferrand Cedex 9 (FR)**

(56) Documents cités:
**EP-A1- 1 566 292     DE-A1-102007 020 336**
**FR-A1- 2 763 892**

Printed by Jouve, 75001 PARIS (FR)

## Description

DOMAINE DE L'INVENTION

L'invention concerne les bandes de roulement de pneumatique pour pneumatique neige et plus particulièrement des bandes de roulement comportant une pluralité de lames.

ETAT DE LA TECHNIQUE

Une bande de roulement pour pneumatique neige comprend une surface de roulement destinée à venir en contact avec une chassée pendant le roulage. Il est connu de pourvoir cette brande avec des lames de matière délimitées par des découpures.

Chaque lame de matière comprend une surface de contact apte à venir en contact avec une chaussée.

Chaque lame de matière comporte également des arêtes pour « gratter la neige ».

De telles arêtes sont notamment fermées par des incisions comme cela est divulgué dans D2. D1 divulgue un pneumatique comportant des canaux aptes à être mis en pression via un compresseur d'air en vue de modifier le comportement routier du pneumatique.

Au cours de la période d'utilisation du pneumatique neige, celui-ci peut rouler dans des conditions de chaussée enneigée mais également dans des conditions de chaussée sèche.

Dans le cas d'une chaussée enneigée, une augmentation de la pression de contact sur les arêtes de la lame est recherchée afin d'amplifier l'effet de « gratter » la neige. Dans le cas d'une chaussée sèche, on cherche à obtenir une pression de contact répartie de manière homogène sur l'ensemble de la surface de contact de la lame.

Or, la pression de contact recherchée sur les arêtes dans le cas d'une chaussée enneigée est bien supérieure à la pression de contact recherchée sur la surface de contact dans le cas d'une chaussée sèche.

L'invention vise à proposer une bande de roulement de pneumatique adaptée pour fonctionner de manière optimale tant sur chaussée enneigée que sur chaussée sèche.

DEFINITIONS

Par « pneumatique », on entend tous les types de bandages élastiques soumis au cours d'un roulage à une pression interne ou non.

Par « pneumatique neige » (« snow tyre » ou « winter tyre » en anglais), on entend un pneumatique repéré par une inscription M+S ou M.S. ou encore M&S, marquée sur au moins un des flancs du pneumatique. Ce pneumatique neige se caractérise par un dessin de la bande de roulement et une structure destinés avant tout à assurer, dans la boue et la neige fraîche ou fondante, un comportement meilleur que celui d'un pneumatique du type routier (en anglais appelés « road type tyre ») conçu pour rouler sur des sols non enneigés.

Par « bande de roulement d'un pneumatique », on entend une quantité de composition de caoutchouc délimitée par des surfaces latérales et par deux surfaces principales dont une est destinée à entrer en contact avec un sol lorsque le pneumatique roule.

Par « surface de roulement », on entend la surface formée par les points de la bande de roulement du pneumatique qui entrent en contact avec le sol lorsque le pneumatique roule.

Par « rainure » (« groove » en anglais), on entend une découpure (« cut-out » en anglais) dont les faces de matière ne se touchent pas dans les conditions usuelles de roulage. Généralement, la largeur d'une rainure est supérieure ou égale à 1 mm.

Par « incision » (« sipe » en anglais), on entend une découpure dont les faces de matière se touchent dans les conditions usuelles de roulage. Généralement, la largeur d'une incision est inférieure à 1 mm.

Par « lame », on entend un bloc de gomme délimité par deux découpures transversales. La lame présente un grand élancement, c'est-à-dire une grande longueur et une grande hauteur pour une largeur faible relativement à cette longueur et à cette hauteur. La longueur de la lame est la dimension de ladite lame selon une direction transversale. La largeur de la lame est la dimension de ladite lame selon une direction circonférentielle. La hauteur de la lame est la dimension de ladite lame selon une direction radiale, c'est-à-dire selon une direction perpendiculaire à la surface de contact de la lame.

Par direction circonférentielle, on entend une direction tangente à un cercle dont le centre est sur l'axe de rotation d'un pneumatique pourvu de la bande de roulement.

Par direction transversale, on entend une direction parallèle à l'axe de rotation dudit pneumatique.

Par cavité, on entend une partie en creux délimitée par des parois de gomme.

RESUME DE L'INVENTION

L'invention concerne une bande de roulement pour pneumatique neige comportant des lames délimitées par des découpures, chaque lame comprenant une surface de contact destinée à entrer en contact avec une chaussée, tout ou parte desdites lames comprenant au moins une cavité s'étendant dans la longueur de la lame, ladite cavité ayant, selon une coupe circonférentielle, une section globalement rectangulaire présentant une épaisseur E mesurée selon une direction perpendiculaire à la surface de contact de la lame et une longueur L mesurée selon la direction circonférentielle. Les dimensions E et L de la cavité sont déterminées de sorte que

$$L \leq \frac{1}{2} * W,$$ avec W la largeur de la lame mesurée selon la direction circonférentielle et $E \leq \frac{1}{2} * L$. La bande de roulement comprend une incision s'étendant principalement selon la direction circonférentielle et par laquelle ladite cavité débouche sur la surface de contact de la lame.

La présence de telles cavités dans la bande de roulement permet d'avoir un comportement différent des lames selon le type de chaussée (chaussée enneigée ou chaussée sèche). Dans le cas où la bande de roulement roule sur une chaussée enneigée, l'adhérence entre la lame et la chaussée est faible, la sollicitation tangentielle qui va alors s'exercer sur la lame va entraîner une déformation modérée de cette lame par cisaillement. Cette déformation modérée de la lame ne va pas permettre un écrasement suffisant de la lame pour faire disparaître les effets de la cavité dans la lame. La pression qui va s'exercer sur la surface de contact de la lame va ainsi être plus faible dans les zones de la surface de contact au droit de la cavité et plus forte dans les autres zones de la surface de contact, notamment à proximité des arêtes transversales de la lame.

Dans le cas où la bande de roulement roule sur une chaussée sèche, l'adhérence entre la lame et la chaussée est plus importante, la sollicitation qui va alors s'exercer sur la lame est telle que la cavité est complètement fermée. On rend alors plus homogène la répartition de pression sur la surface de contact de la lame.

En déterminant les dimensions E et L de la cavité de telles manières que ces dimensions satisfont aux équations de la revendication 1, on s'assure que la lame a un comportement adapté au type de chaussée rencontrée (chaussée enneigée ou chaussée sèche).

En outre, on forme la cavité à partir d'un élément moulant. L'élément moulant comprend un élément globalement parallélépipédique pour mouler la cavité. L'élément moulant comprend également une âme solidaire de l'élément parallélépipédique. L'âme crée une incision débouchant sur la surface de contact. En configurant l'élément moulant de manière à ce que l'incision formée par l'âme s'étend principalement selon la direction circonférentielle, c'est-à-dire globalement perpendiculairement à la direction d'extension de la cavité dans la longueur de la lame, on évite que cette incision vienne perturber d'une manière trop importante le fonctionnement de la cavité lorsque la lame est en contact avec le sol.

De manière préférentielle, $E = \frac{K}{(W - L)}$,

avec K compris entre 1,5 et 3,5.

L'épaisseur E est ainsi inversement proportionnelle à la différence entre la largeur de la lame et la longueur de la cavité. Plus cette différence est importante, plus la lame est rigide et il est alors plus difficile de fermer la cavité. Il faut donc prévoir une épaisseur de cavité plus faible pour que la cavité puisse bien se fermer au cours d'un roulage sur une chaussée sèche.

Inversement, plus cette différence est faible, moins la lame est rigide et il est plus facile de fermer la cavité. Il faut donc prévoir une épaisseur de cavité plus importante pour que la cavité reste ouverte au cours d'un roulage sur une chaussée enneigée.

De manière préférentielle, K est compris entre 2 et 3. Encore plus préférentiellement, K est égal à 2,4.

Dans une variante de réalisation, la lame comprend au moins deux cavités décalées, selon la direction perpendiculaire à la surface de contact de la lame, d'une distance au moins égale à 0,1 mm et au plus égale à 8 mm.

Ainsi, même après une certaine usure de la bande de roulement, on garantit dans le temps un comportement différent de la lame selon le type de chaussée rencontré.

Un autre objet de l'invention concerne une bande de roulement pour pneumatique hiver comportant des lames délimitées par des découpures, chaque lame comprenant une surface de contact destinée à entrer en contact avec une chaussée et chaque lame étant apte à se déformer au moins partiellement lorsque ladite lame est en contact avec une chaussée, tout ou partie desdites lames comprenant au moins une cavité délimitée par deux parois de gomme, la cavité étant apte à prendre un état ouvert dans lequel les parois de gomme sont distantes l'une de l'autre et un état fermé dans lequel les parois de gomme sont en contact. Lorsque l'adhérence entre la lame et la chaussée est supérieure à un seuil d'adhérence prédéterminé, la déformation de la lame est telle que la cavité est fermée. Lorsque l'adhérence entre ladite lame et ladite chaussée est inférieure audit seuil d'adhérence, la cavité est ouverte.

D'autres caractéristiques et avantages de l'invention ressortiront de la description suivante, donnée à titre d'exemple, sans caractère limitatif, en regard des dessins annexés sur lesquels :

- la figure 1 présente une vue partielle de la surface de roulement d'une bande de roulement conforme à l'invention;

- la figure 2 présente un bloc de gomme appartenant à la bande de roulement de la figure 1 comportant une pluralité de lames ;

- la figure 3 présente schématiquement une vue en coupe circonférentielle de la lame de la figure 2 selon la ligne I-I ;

- la figure 4 présente une vue en coupe circonférentielle d'une lame conformément à un second mode de réalisation ;

- la figure 5 présente schématiquement un élément moulant apte à mouler les cavités de la figure 4 ;

- la figure 6 présente une vue en coupe transversale de la lame de la figure 4.

Dans la description qui va suivre, des éléments sensiblement identiques ou similaires seront désignés par des références identiques.

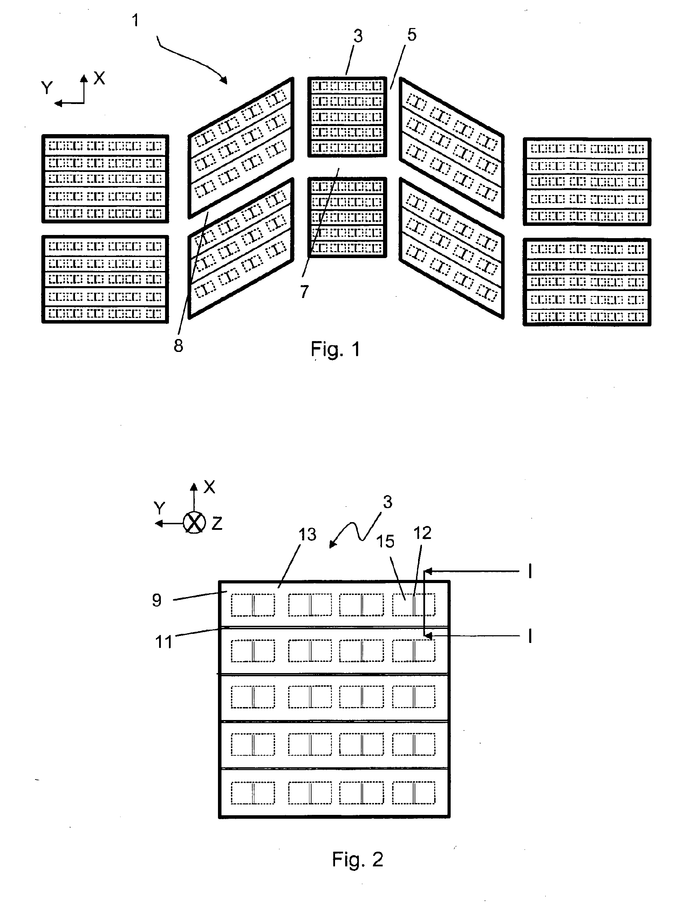

La figure 1 présente une vue partielle d'une surface de roulement d'une bande de roulement 1.

La bande de roulement 1 comprend des blocs de gomme 3 en relief. Les blocs de gomme sont délimités par des rainures 5, 7, 8. On distingue ainsi sur la figure 1, des rainures 5 s'étendant selon une direction circonférentielle, (c'est-à-dire selon la direction X de la figure 1), des rainures 7 s'étendant selon une direction transversale (c'est-à-dire selon la direction Y de la figure 1), et des rainures 8 s'étendant selon une direction oblique. Les rainures 5, 7, 8 favorisent le drainage de l'eau lorsque la chaussée est humide.

La figure 2 représente plus spécifiquement un bloc de gomme 3. Le bloc de gomme 3 comprend une pluralité d'incisions transversales 11. Les incisions transversales délimitent des lames de gomme.

Chaque lame de gomme 9 comprend au moins une cavité 15. Dans l'exemple présenté à la figure 2, chaque lame 9 comprend 4 cavités qui s'étendent principalement dans la longueur de la lame 9, c'est-à-dire selon la direction transversale Y. Chaque cavité 15 est présente à l'intérieur de la lame 9 sous la surface de contact 13 de la lame 9. Chaque lame 9 comprend également une première arête et une seconde arête qui s'étendent selon la direction transversale Y. La première arête est ici confondue avec un bord de l'élément 3 (représenté en trait fort sur la figure 2) et la seconde arête est définie par l'incision 11 qui sépare la lame 9 d'une autre lame adjacente. Ce sont ces arêtes qui viennent gratter la neige au cours d'un roulage de la bande de roulement.

La lame 9 comprend, en outre, une pluralité d'incisions circonférentielles 12 s'étendant selon la direction circonférentielle X et débouchant sur la surface de contact 13 de la lame 9. Chaque incision circonférentielle 12 s'étend radialement vers l'intérieur de la bande de roulement et débouche dans une des cavités 15.

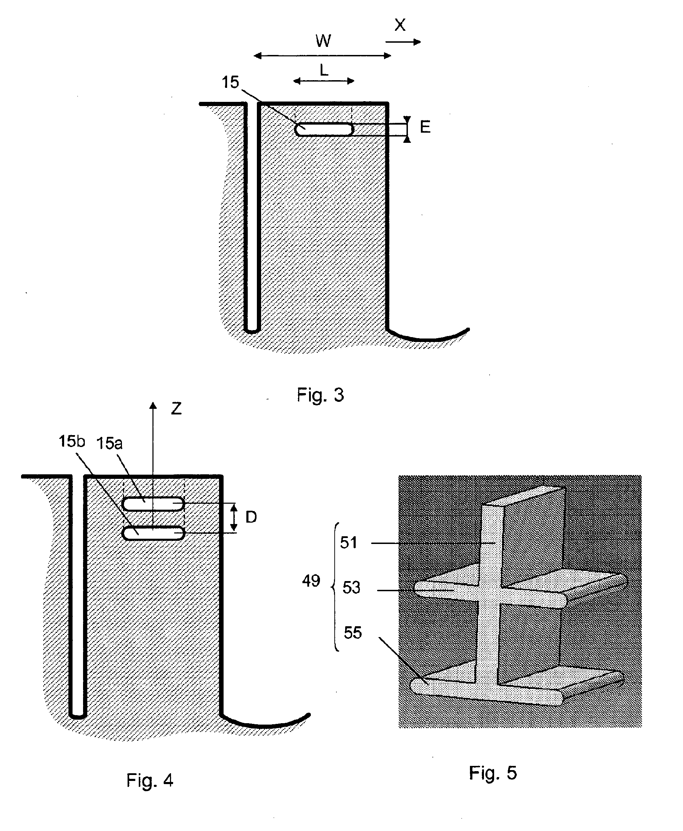

La figure 3 présente schématiquement une vue en coupe d'une lame selon la ligne I-I de la figure 2.

Dans cette vue en coupe, la cavité 15 a une section globalement rectangulaire présentant une épaisseur E mesurée selon une direction perpendiculaire à la surface de contact de la lame et une longueur L mesurée selon la direction circonférentielle X.

Les dimensions E et L de la cavité sont déterminées de sorte que $L \leq \frac{1}{2} * W$, avec W la largeur de la lame mesurée selon la direction circonférentielle et

$$E \leq \frac{1}{2} * L.$$

De manière préférentielle, $E = \dfrac{K}{(W - L)}$, avec K compris entre 1,5 et 3,5.

Dans un mode de réalisation particulier, K=2,4. Ainsi dans l'exemple où W = 8 mm et L = 4 mm, on a E=0,6mm.

On notera que les pointillés présents sur la figure 3 délimitent l'incision circonférentielle 12 associée à la cavité 15, cette incision étant décalée par rapport au plan de la figure 3.

Au cours du roulage du pneumatique, la cavité 15 de la lame 9 peut prendre différents états en fonction de l'adhérence entre la surface de contact de la lame et la chaussée.

Dans le cas où la chaussée est enneigée, l'adhérence entre la surface de contact de la lame et la chaussée est faible (par exemple inférieure à 0,7). La sollicitation tangentielle qui va alors s'exercer sur la lame va entraîner une déformation modérée de la lame. La cavité prend ainsi un état intermédiaire entre un état ouvert dans lequel les parois de gomme délimitant la cavité sont distantes et un état fermé dans lequel les parois de gomme sont en contact.

Dans le cas où la chaussée est sèche, l'adhérence entre la surface de contact de la lame et la chaussée est plus importante (par exemple supérieure à 0,7). La sollicitation tangentielle qui va alors s'exercer sur la lame va entraîner une déformation plus importante de la lame. La déformation de la lame va rapprocher les parois de gomme délimitant la cavité et à terme la cavité va se fermer. Dans l'état où la cavité est complètement fermée, la lame a une rigidité qui correspond sensiblement à celle d'une lame dépourvue de cavité.

La figure 4 présente une vue en coupe circonférentielle d'une lame conformément à un second mode de réalisation.

Dans ce mode de réalisation, la lame 9 comprend deux cavités 15a, 15b décalées l'une de l'autre, selon la direction Z, d'une distance D.

La distance D est au moins égale à 0,1 mm et au plus égale à 8 mm.

La figure 5 présente schématiquement un élément moulant 49 apte à mouler les cavités 15a, 15b de la figure 4.

L'élément moulant 49 comprend une âme 51 et deux éléments globalement parallélépipédiques 53, 55. L'âme 51 et les deux éléments parallélépipédiques 53, 55 sont, ici, venus de matière.

L'âme 51 est apte à mouler une incision circonférentielle 12 et les deux éléments parallélépipédiques sont aptes à mouler les cavités 15a et 15b.

On notera que l'extrémité libre de l'âme 51 est destinée à être fixée à un moule de vulcanisation.

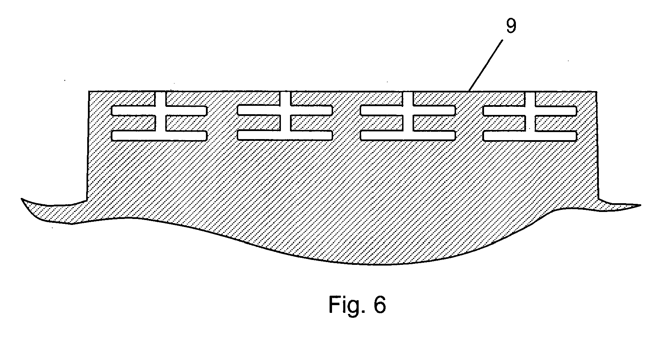

La figure 6 présente une vue en coupe transversale de la lame 9 de la figure 5.

Dans cette coupe, la lame 9 comprend deux niveaux de cavités dans la hauteur de la lame. Chaque niveau comprend plusieurs cavités espacées les unes des autres dans la longueur de la lame.

En variante, il est possible de réunir l'ensemble des cavités d'un même niveau pour former une seule cavité.

## Revendications

1.  Bande de roulement pour pneumatique neige comportant des lames (9) délimitées par des découpures, chaque lame comprenant une surface de contact (13) destinée à entrer en contact avec une chaussée, tout ou parte desdites lames comprenant au moins une cavité (15 ; 15a, 15b) s'étendant dans la longueur de la lame, ladite cavité ayant, selon une coupe circonférentielle, une section globalement rectangulaire présentant une épaisseur E mesurée selon une direction perpendiculaire à la surface de contact de la lame et une longueur L mesurée selon la direction circonférentielle **caractérisée en ce que** les dimensions E et L de la cavité sont déterminées de sorte que $L \leq \frac{1}{2} * W$ , avec W la largeur de la lame mesurée selon la direction circonférentielle et $E \leq \frac{1}{2} * L,$ **et en ce que** la bande de roulement comprend une incision (12) s'étendant principalement selon la direction circonférentielle et par laquelle ladite cavité débouche sur la surface de contact (13) de la lame.

2.  Bande de roulement selon la revendication 1, **caractérisée en ce que** $E = \frac{K}{(W - L)}$ , avec K compris

    entre 1,5 et 3,5.

3.  Bande de roulement selon la revendication 2, **caractérisée en ce que** K est compris entre 2 et 3.

4.  Bande de roulement selon l'une quelconque des revendications 2 ou 3, **caractérisée en ce que** K est égal à 2,4.

5.  Bande de roulement selon l'une quelconque des revendications 1 à 4, **caractérisée en ce que** la lame comprend au moins deux cavités (15a, 15b) décalées, selon la direction perpendiculaire à la surface de contact de la lame, d'une distance au moins égale à 0,1 mm et au plus égale à 8 mm.

**Patentansprüche**

1.  Reifenprofil für Winterreifen, umfassend Lamellen (9), die von Einschnitten begrenzt sind, wobei jede Lamelle eine Kontaktfläche (13) umfasst, die dazu bestimmt ist, mit einer Fahrbahn in Kontakt zu kommen, wobei die Gesamtheit oder ein Teil der Lamellen mindestens einen Hohlraum (15; 15a, 15b) umfasst, der sich in der Länge der Lamelle erstreckt, wobei der Hohlraum in einem Umfangsschnitt einen global rechteckigen Querschnitt hat, der eine Dicke E, gemessen in eine Richtung senkrecht auf die Kontaktfläche der Lamelle, und eine Länge L, gemessen in Umfangsrichtung, aufweist, **dadurch gekennzeichnet, dass** die Abmessungen E und L des Hohlraums derart bestimmt sind, dass L≤½*W, wobei W die Breite der Lamelle, gemessen in Umfangsrichtung ist, und dass E≤½*L, und dass das Reifenprofil einen Einschnitt (12) umfasst, der sich hauptsächlich in Umfangsrichtung erstreckt, und durch den der Hohlraum auf der Kontaktfläche (13) der Lamelle mündet.

2.  Reifenprofil nach Anspruch 1, **dadurch gekennzeichnet, dass** E=K/(W-L), wobei K zwischen 1,5 und 3,5 beträgt.

3.  Reifenprofil nach Anspruch 2, **dadurch gekennzeichnet, dass** K zwischen 2 und 3 beträgt.

4.  Reifenprofil nach einem der Ansprüche 2 oder 3, **dadurch gekennzeichnet, dass** K gleich 2,4 ist.

5.  Reifenprofil nach einem der Ansprüche 1 bis 4, **dadurch gekennzeichnet, dass** die Lamelle mindestens zwei Hohlräume (15a, 15b) umfasst, die senkrecht auf die Kontaktfläche der Lamelle um einen Abstand mindestens gleich 0,1 mm und höchstens gleich 8 mm versetzt sind.

## Claims

1.  Tread for a snow tyre comprising strips (9) delimited by cut-outs, each strip comprising a contact surface (13) designed to come into contact with a road, all or some of the said strips comprising at least one cavity (15; 15a, 15b) extending in the length of the strip, the said cavity having, in a circumferential section, a generally rectangular cross section having a thickness E measured in a direction perpendicular to the contact surface of the strip and a length L measured in the circumferential direction, **characterized in that** the dimensions E and L of the cavity are determined such that $L \leq \frac{1}{2} * W$ , where W is the width of the strip measured in the circumferential direction and $E \leq \frac{1}{2} * L$ , **and in that** the tread comprises a sipe (12) extending mainly in the circumferential direction and by which the said cavity emerges on the contact surface (13) of the strip.

2. Tread according to Claim 1, **characterized in that** $E = \frac{K}{(W - L)}$ **,** where K is between 1.5 and 3.5.

3. Tread according to Claim 2, **characterized in that** K is between 2 and 3.

4. Tread according to either one of Claims 2 and 3, **characterized in that** K is equal to 2.4.

5. Tread according to any one of Claims 1 to 4, **characterized in that** the strip comprises at least two cavities (15a, 15b) offset, in the direction perpendicular to the contact surface of the strip, by a distance at least equal to 0.1 mm and at most equal to 8 mm.

Fig. 1

Fig. 2

Fig. 3

Fig. 4

Fig. 5

9

Fig. 6